# EUROPEAN PATENT APPLICATION

(11) **EP 2 720 182 A1**
(43) Date of publication of application: **16.04.2014**
(21) Application number: 12804579.6
(22) Date of filing: 02.03.2012
(51) Int. Cl.: G06Q 30/02

(54) **REVIEW SUBMISSION CONTROL DEVICE, REVIEW SUBMISSION CONTROL METHOD, REVIEW SUBMISSION CONTROL PROGRAM, AND COMPUTER-READABLE RECORDING MEDIUM RECORDING SAID PROGRAM**

(30) Priority: 30.06.2011 JP 2011145902
(71) Applicant: Rakuten, Inc., Tokyo 140-0002 (JP)
(72) Inventor: YAMAMOTO Tadahiro, Tokyo 140-0002 (JP)
(74) Representative: EIP
(86) International application number: PCT/JP2012/055468
(87) International publication number: WO 2013/001854

(57) **Abstract**

In order to prevent an increase in posting of inappropriate reviews not helpful to users, a review posting control device (1) includes a restriction setting unit that selects a reviewer having received a specified level or higher of negative evaluations in evaluation information on a posted review, and sets restrictions on posting by the reviewer in accordance with the level of negative evaluations. Posting by the reviewer of the review having received negative evaluations is thereby restricted.

## Description

### Technical Field

The present invention relates to a review posting control device, a review posting control method, a review posting control program, and a computer-readable recording medium recording the program.

### Background Art

In an existing electronic commerce site, posting of reviews including comments and feedback on items or the like is accepted, and the accepted reviews are presented to users. For example, a system that allows posting of an article about an item in an electronic commerce site is disclosed in the following Patent Literature 1. Further, a site configured to accept evaluations on the presented reviews is also known.

### Citation List

### Patent Literature

PTL 1: Japanese Unexamined Patent Application Publication No. 2003-167990

### Summary of Invention

### Technical Problem

When a certain user is thinking about purchasing an item or the like, reviews for the item that have been posted by other users are helpful as reference information. In some cases, however, a review that is not helpful to a user who is thinking about purchasing an item is posted. For example, there is a case where a review that gives a negative comment on an item is posted with the intention to give a negative impact on the manufacturer of the item.

In view of the foregoing, an object of the present invention is to provide a review posting control device, a review posting control method, a review posting control program, and a computer-readable recording medium recording the program capable of preventing an increase in posting of inappropriate reviews that are not helpful to users.

### Solution to Problem

To solve the above problem, a review posting control device according to one aspect of the present invention includes a selecting means configured to select a reviewer having posted a review having received a specified level or higher of negative evaluations based on one or more evaluation information containing positive or negative evaluations by a review evaluator on a review posted by a reviewer for a review target, and a posting restricting means configured to impose specified posting restrictions in accordance with a level of negative evaluations received by the review on the reviewer selected by the selecting means.

A review posting control method according to one aspect of the present invention is a review posting control method performed by a review posting control device, the method including a selecting step of selecting a reviewer having posted a review having received a specified level or higher of negative evaluations based on one or more evaluation information containing positive or negative evaluations by a review evaluator on a review posted by a reviewer for a review target, and a posting restricting step of imposing specified posting restrictions in accordance with a level of negative evaluations received by the review on the reviewer selected in the selecting step.

A review posting control program according to one aspect of the present invention is a review posting control program that causes a computer to function as a review posting control device, the program causing the computer to implement a selecting function to select a reviewer having posted a review having received a specified level or higher of negative evaluations based on one or more evaluation information containing positive or negative evaluations by a review evaluator on a review posted by a reviewer for a review target, and a posting restricting function to impose specified posting restrictions in accordance with a level of negative evaluations received by the review on the reviewer selected by the selecting function.

A computer-readable recording medium according to one aspect of the present invention is a computer-readable recording medium for recording a review posting control program causing a computer to function as a review posting control device, the review posting control program causing the computer to implement a selecting function to select a reviewer having posted a review having received a specified level or higher of negative evaluations based on one or more evaluation information containing positive or negative evaluations by a review evaluator on a review posted by a reviewer for a review target, and a posting restricting function to impose specified posting restrictions in accordance with a level of negative evaluations received by the review on the reviewer selected by the selecting function.

A review on which negative evaluations are made has a great probability of not being helpful to other users. According to the above-described aspect, the reviewer of a review that has received a specified level or higher of evaluations in evaluation information on the posted review is selected, and restrictions in accordance with the level of negative evaluations are set for posting by the reviewer of the review. Posting by the reviewer of the review that has received negative evaluations is thereby restricted. An increase in posting of inappropriate reviews that are not helpful to users is thereby prevented.

In the review posting control device according to another aspect, when the number of evaluation information containing a specified level or higher of negative evaluations is a specified number or more, or when a sum of values indicating a level of positive evaluations in one or more evaluation information is a specified value or less, the posting restricting means may set restrictions to at least one of processing of posting and contents of posting by the reviewer as the specified restrictions.

In this aspect, the level of negative evaluations on the review for the setting of restrictions on posting is determined appropriately.

In the review posting control device according to another aspect, when a specified number or more of evaluation information indicating a specified level or higher of positive evaluations are received, the posting restricting means may set a lower level of the restrictions than when a specified number or more of the evaluation information are not received.

A review on which positive evaluations are made has a great probability of being helpful to other users. In this aspect, when evaluation information indicating positive evaluations is received, the level of restrictions on posting by the reviewer of the review that has received positive evaluations is set to be low, so that restrictions about posting by that reviewer are adjusted appropriately.

In the review posting control device according to another aspect, the posting restricting means may set restrictions so that a degree of contribution of one unit in a level of negative evaluations in the evaluation information to an increase in a level of restrictions is larger than a degree of contribution of one unit in a level of positive evaluations to a decrease in a level of restrictions.

In this aspect, restrictions on posting by a reviewer are adjusted more appropriately, and therefore the quality of posted reviews is improved.

In the review posting control device according to another aspect, the posting restricting means may determine presence or absence of a correlation between the reviewer and a review evaluator having made a specified level or higher of positive evaluations in the evaluation information based on the evaluation information, and when it is determined that there is a correlation, the posting restricting means may set a smaller amount of decrease in a level of restrictions based on positive evaluations by the review evaluator compared with that when it is determined that there is no correlation.

In the case where there is a correlation between a reviewer and a review evaluator who has made positive evaluations on the review, there is a high possibility that the review evaluator has made positive evaluations for the purpose of lowering the level of restrictions on posting by the reviewer in collusion with the reviewer. According to the above aspect, the degree of contribution of positive evaluations by a review evaluator who is determined to have a correlation with a reviewer to a decrease in the level of restrictions is set to be low. It is thus prevented that the level of restrictions is improperly set to be low.

In the review posting control device according to another aspect, when a proportion of the number of evaluation information indicating positive evaluations to the number of evaluation information by a same review evaluator on each of a plurality of reviews posted by one reviewer is a specified percentage or more, the posting restricting means may determine that there is a correlation between the one reviewer and the review evaluator.

In this aspect, a correlation between a reviewer and a review evaluator who has made positive evaluations is determined accurately and appropriately.

In the review posting control device according to another aspect, the posting restricting means may use a fact that the number of evaluation information indicating positive evaluations by a same review evaluator on each of a plurality of reviews posted by one reviewer is a specified number or more as a necessary condition to determine that there is a correlation between the one reviewer and the review evaluator.

In this aspect, a correlation between a reviewer and a review evaluator who has made positive evaluations is determined easily.

In the review posting control device according to another aspect, the posting restricting means may determine presence or absence of a correlation between the reviewer and a review evaluator having made a specified level or higher of negative evaluations in the evaluation information based on the evaluation information, and when it is determined that there is a correlation, the posting restricting means may set a lower level of restrictions in setting of restrictions based on negative evaluations by the review evaluator compared with that when it is determined that there is no correlation.

In the case where there is a correlation between a reviewer and a review evaluator who has made negative evaluations on the review, there is a high possibility that the review evaluator has made negative evaluations for the purpose of causing disadvantages to the reviewer. When the contents of the review are helpful, it is not suitable to improperly restrict posting by the reviewer of that review based on such negative evaluations. According to the above aspect, when it is determined that there is a correlation between a review evaluator who has made negative evaluations and a reviewer, the level of restrictions set on the basis of the evaluations by the review evaluator is set to be low. Improper restrictions on the reviewer are thereby prevented.

In the review posting control device according to another aspect, the posting restricting means may use a fact that a proportion of the number of evaluation information indicating negative evaluations to the number of evaluation information by a same review evaluator on each of a plurality of reviews posted by one reviewer is a predetermined percentage or more as a necessary condition to determine that there is a correlation between the one reviewer and the review evaluator.

In this aspect, a correlation between a reviewer and a review evaluator who has made negative evaluations is determined accurately and appropriately.

In the review posting control device according to another aspect, when the number of evaluation information indicating negative evaluations by a same review evaluator on each of a plurality of reviews posted by one reviewer is a predetermined number or more, the posting restricting means may determine that there is a correlation between the one reviewer and the review evaluator.

In this aspect, a correlation between a reviewer and a review evaluator who has made negative evaluations is determined easily.

In the review posting control device according to another aspect, the posting restricting means may set a restrictive time period during which the reviewer of the review cannot post a review in accordance with a level of negative evaluations on the review as restrictions on processing of posting by the reviewer.

In this aspect, posting by the reviewer of a review that has received negative evaluations is prohibited for a given period of time, and thus an increase in posting of inappropriate reviews that are not helpful to users is prevented.

In the review posting control device according to another aspect, the posting restricting means may set a starting point of the restrictive time period to the review posting time.

In this aspect, posting by the reviewer of a review that has received negative evaluations is prohibited from the time when the review is posted, and thus successive posting of inappropriate reviews that are not helpful to users is prevented.

In the review posting control device according to another aspect, the posting restricting means may set a starting point of the restrictive time period to next review posting time following the review posting.

In this aspect, posting by the reviewer of a review that has received negative evaluations is prohibited from the time when the reviewer makes the next posting following the posting of that review, and expiration of the restrictive time period between those posting times is thereby prevented, and the penalty of restrictions on posting can be reliably imposed on the reviewer.

In the review posting control device according to another aspect, the posting restricting means may perform control so as not to accept the next review posting.

In the review posting control device according to another aspect, the posting restricting means may set an upper limit or a lower limit of the number of characters in contents of the review in accordance with a level of negative evaluations on the review as restrictions on contents of posting by the reviewer.

In this aspect, it is prevented that inappropriate reviews that are not helpful to users are presented.

In the review posting control device according to another aspect, the review posting control device may further include an evaluation information accepting means configured to accept the evaluation information, and an evaluation information storing means configured to store the evaluation information accepted by the evaluation information accepting means, and the posting restricting means may set the restrictions by referring to the evaluation information stored in the evaluation information storing means. In this case, evaluation information on reviews is reliably accumulated.

### Advantageous Effects of Invention

According to one aspect of the present invention, it is possible to prevent an increase in posting of inappropriate reviews that are not helpful to users.

### Brief Description of Drawings

Fig. 1 is a diagram showing a device configuration of a system including a review posting control device.
Fig. 2 is a block diagram showing a functional configuration of a review posting control device.
Fig. 3 is a diagram showing a hardware configuration of a review posting control device.
Fig. 4 is a diagram showing a configuration of a review history storage unit and an example of data stored therein.
Fig. 5 is an example of a screen for receiving input of evaluation information which is displayed on a terminal.
Fig. 6 is a diagram showing an example of a starting point of a restrictive time period.
Fig. 7 is a flowchart showing a process in a review posting control device.
Fig. 8 is a flowchart showing a process in a review posting control device.
Fig. 9 is a diagram showing a structure of a review posting control program.

### Description of Embodiments

An embodiment of the present invention is described hereinafter in detail with reference to the appended drawings. Note that, in the description of the drawings, the same or equivalent elements are denoted by the same reference symbols, and the redundant explanation thereof is omitted.

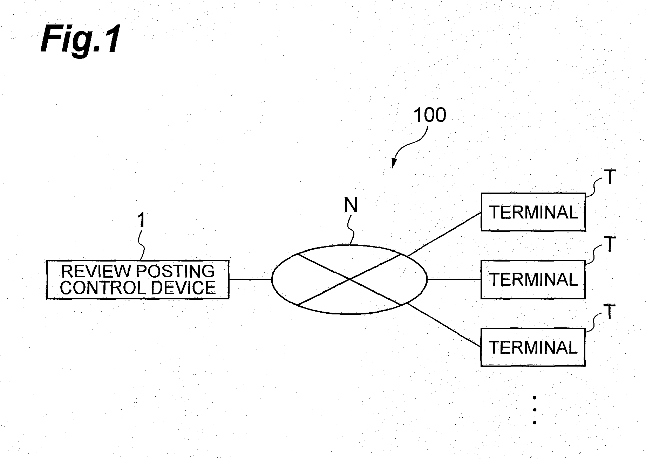

Fig. 1 is a block diagram showing a device configuration of a system 100 that includes a review posting control device according to this embodiment. The system 100 includes a review posting control device 1 and a plurality of terminals T. The review posting control device 1 is a device that accepts posting of reviews on a review target from the terminals T and presents the accepted reviews to the terminal T. Specifically, the review posting control device 1 accepts reviews including comments and feedback on an item provided through an electronic commerce site or the like from users and shows the accepted reviews in association with the item to users. Although an item on an electronic commerce site or the like serves as the review target, the concept of the review target is not limited to an item. For example, on a site that accepts reviews on works such as movies and books and shows the accepted reviews to users, movies and books serve as the review target.

The review posting control device 1 and the user terminals T can communicate with one another through a communication network N that is the Internet, a wireless LAN, a mobile communication network or the like. The terminal T is a mobile terminal, a personal computer or the like, for example. Although three terminals T are shown in Fig. 1, the number of terminals in the system 100 is arbitrary.

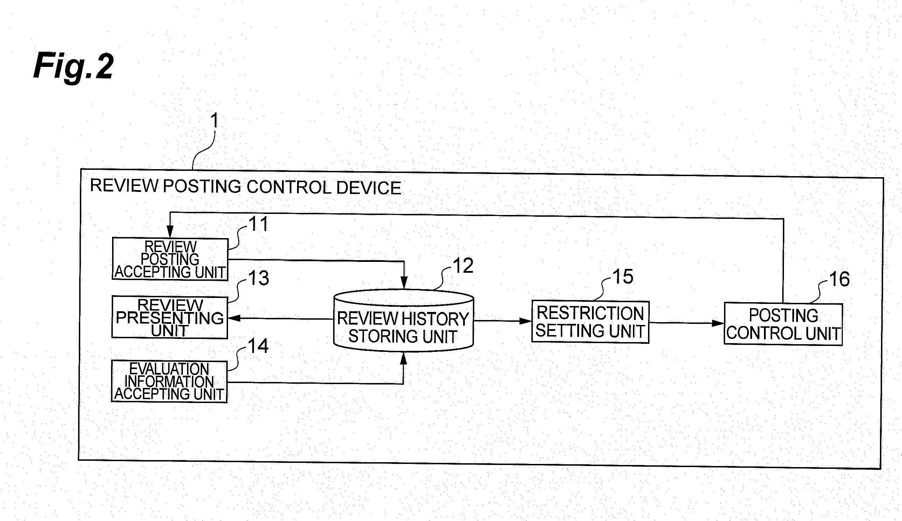

Fig. 2 is a block diagram showing the functional configuration of the review posting control device 1 according to this embodiment. As shown in Fig. 2, the review posting control device 1 includes, as functional components, a review posting accepting unit 11; a review history storing unit 12 (evaluation information storing means), a review presenting unit 13, an evaluation information accepting unit 14 (evaluation information accepting means), a restriction setting unit 15 (selecting means, posting restricting means), and a posting control unit 16. Note that, although the functional units 11 to 16 are incorporated in one device in this embodiment, the functional units 11 to 16 may be incorporated in separate devices that can communicate with one another. For example, the review posting control device 1 may be composed only of the restriction setting unit 15.

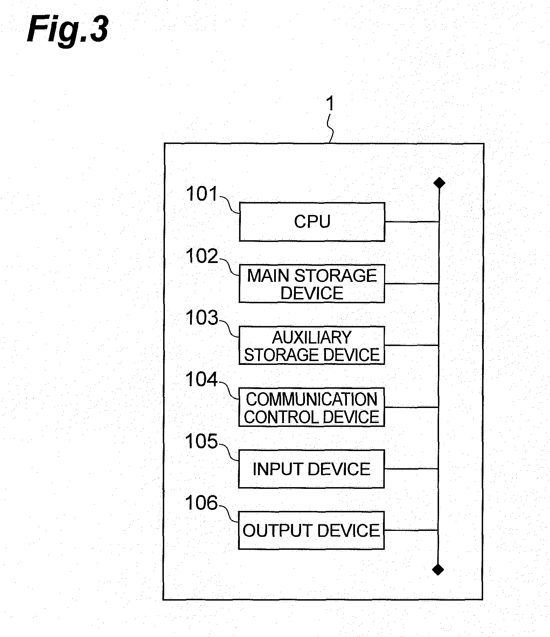

Fig. 3 is a hardware configuration diagram of the evaluation information identifying device 1. The evaluation information identifying device 1 is physically configured as a computer system that includes a CPU 101, a main storage device 102 such as memory like RAM and ROM, an auxiliary storage device 103 such as a hard disk, a communication control device 104 such as a network card, an input device 105 such as a keyboard and a mouse, an output device 106 such as a display and the like.

The functions shown in Fig. 2 are implemented by loading given computer software (review posting control program) onto hardware such as the CPU 101 or the main storage ; device 102, making the communication control device 104, the input device 105 and the output device 106 operate under control of the CPU 101, and performing reading and writing of data in the main storage device 102 or the auxiliary storage device 103. Data and database required for the processing is stored in the main storage device 102 or the auxiliary storage device 103.

The review posting accepting unit 11 is a part that accepts posting of reviews on a review target from the terminals T through the network N. The reviews can include text data representing user's comments and feedback on the review target and numeric data representing the evaluation value of the review target. The review posting accepting unit 11 stores the accepted reviews into the review history storing unit 12.

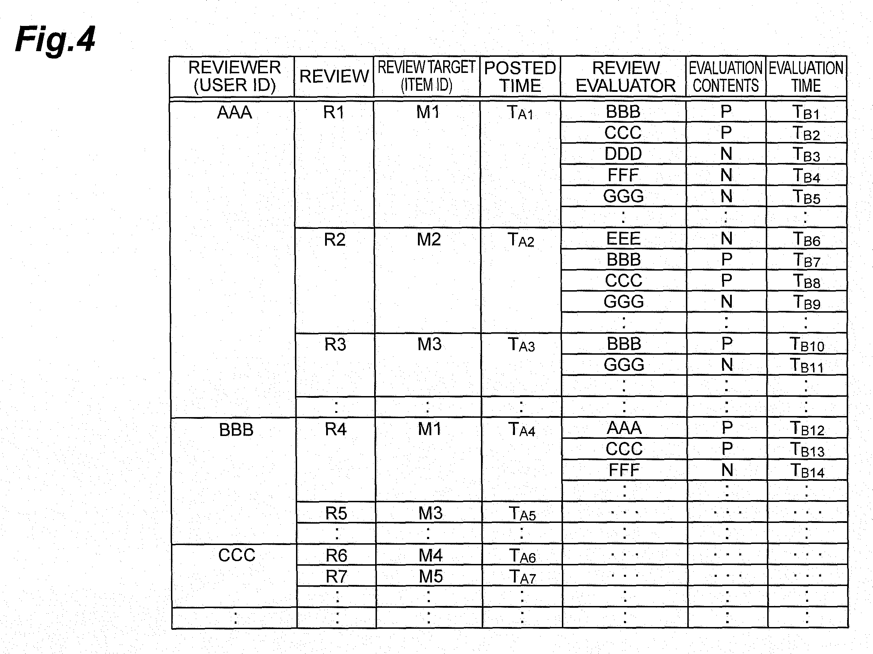

The review history storing unit 12 is a part that stores the contents of reviews and the like accepted by the review posting accepting unit 11. Fig. 4 is a diagram showing the configuration of the review history storing unit 12 and an example of data stored therein. As shown in Fig. 4, the review history storing unit 12 stores review ID, item ID and posted time in association with each user ID for identifying a reviewer. For example, the review identified by the review ID "R1" is associated with the user ID "AAA" and further associated with the item ID "M1" of the review target of the review and the posted time "T_{A1}". Further, the review history storing unit 12 stores, for each review, evaluation information on the review. The evaluation information is described later.

The review presenting unit 13 is a part that presents the contents of reviews accepted by the review posting accepting unit 11 to the terminals T. Specifically, the review presenting unit 13 transmits data for displaying the contents of reviews on a Web page or the like to the terminals T through the network N.

The evaluation information accepting unit 14 is a part that accepts evaluation information from the terminals T of review evaluators. The evaluation information is information indicating the level of a positive or negative evaluation on a presented review by a review evaluator.

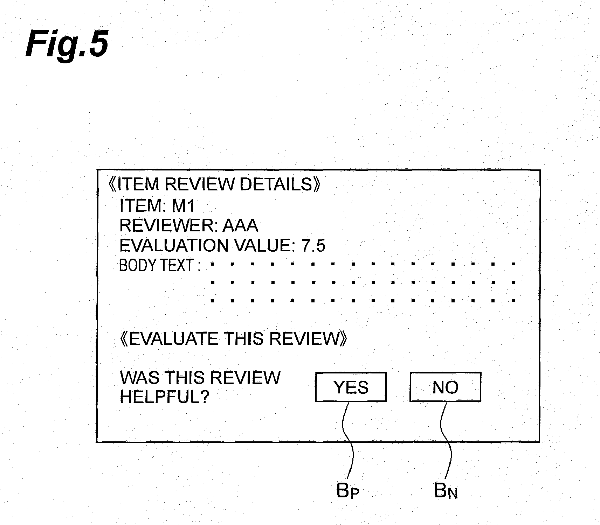

Fig. 5 is an example of a screen for receiving input of evaluation information that is displayed on the terminal T. In the screen example shown in Fig. 5, the review contents transmitted from the review presenting unit 13 to the terminal T are shown, and a button B_{P} for inputting a positive evaluation on the review and a button B_{N} for inputting a negative evaluation on the review are placed. When the button B_{P} is operated in the terminal T, the evaluation information accepting unit 14 accepts evaluation information containing a positive evaluation. On the other hand, when the button BN is operated in the terminal T, the evaluation information accepting unit 14 accepts evaluation information containing a negative evaluation.

The evaluation information accepting unit 14 stores the accepted evaluation information in association with the review ID of the review as the evaluation target of the evaluation information into the review history storing unit 12. Referring back to Fig. 4, the review history storing unit 12 stores the user ID of a review evaluator, the contents of evaluation and the evaluation time as the evaluation information. The contents of evaluation are represented by data (P) indicating a positive evaluation or data (N) indicating a negative evaluation. Further, the evaluation time T_{B} indicates a time when the evaluation information is accepted by the review evaluation accepting unit 14. For example, as the evaluation information on the review "R1", the evaluation information containing information such as the review evaluator "BBB", the evaluation contents "N" and the evaluation time "T_{B1}" is stored in Fig. 4. Note that, although the contents of evaluation indicate either one of two levels of evaluation, positive P or negative N, in the evaluation information in this embodiment, it is not limited thereto, and information indicating more levels of evaluation may be used. For example, the contents of evaluation may be a five-level score indicating the level of positive evaluations. The following description is based on the assumption that the contents of evaluation indicate either one of two levels of evaluation, positive P or negative N, in this embodiment.

The restriction setting unit 15 is a part that selects a reviewer who has posted a review that has received a specified level or higher of negative evaluations based on one or more evaluation information including positive or negative evaluations by review evaluators on a review posted by a reviewer for a review target and imposes specified posting restrictions in accordance with the level of negative evaluations received by the review on the selected reviewer.

To be specific, the restriction setting unit 15 refers to the evaluation information accepted by the evaluation information accepting unit 14 and, when the level of negative evaluations on a review by one reviewer is a specified level or higher, selects the reviewer to impose restrictions on review posting and sets restrictions to the review posting. The determination on the level of negative evaluations and the setting of restrictions are described in detail below.

For example, the restriction setting unit 15 is a part that sets restrictions to at least one of the processing of posting and the contents of posting by the reviewer of a review when the level of negative evaluations on the review is a specified level or higher based on one or more evaluation information accepted by the evaluation information accepting unit 14.

To be specific, the restriction setting unit 15 sets restrictions to review posting when there is a specified number or more of evaluation information containing a specified level or higher of negative evaluations, for example. To be more specific, the restriction setting unit 15 refers to the review history storing unit 12 shown in Fig. 4, and when the number of evaluation information indicating negative evaluations (N) on one review is a specified number or more, sets a predetermined specified level of restrictions to review posting by the reviewer of the one review. In this setting of restrictions, the level of negative evaluations on a review which is used for the setting of restrictions on posting is determined appropriately.

The setting of restrictions is specifically described with reference to the example of Fig. 4. For example, it is assumed that a specified number related to negative evaluation information for making determination about the setting of restrictions to review posting is 2. The review history storing unit 12 shown in Fig. 4 stores three pieces of negative evaluation information (by the review evaluators "DDD", "FFF" and "GGG") on the review "R1" by the reviewer "AAA", and thus the number of negative evaluation information is larger than the specified number "2". Accordingly, the restriction setting unit 15 sets specified restrictions to review posting by the user "AAA".

Further, in the case where the contents of evaluation are represented by a five-level score from 1 to 5 indicating the level of positive evaluations, for example, the restriction setting unit 15 counts the contents of evaluation with the score of 1 and 2 as negative evaluations, and when the number of evaluation information where the score in the contents of evaluation is 1 or 2 is a specified number or more, sets a predetermined specified level of restrictions to review posting by the reviewer of the one review. In this manner, in the case where the contents of evaluation are represented by a multi-level score indicating the level of positive evaluations, the restriction setting unit 15 can count the evaluation information with a score smaller than a specified value as negative evaluations.

Further, in the case where the sum of values indicating the level of positive evaluations in one or more evaluation information is a specified value or less, the restriction setting unit 15 may set restrictions to review posting. To be more specific, in the case where the contents of evaluation are represented by a multi-level score indicating the level of positive evaluations, the restriction setting unit 15 calculates the sum of scores in all evaluation information for one review, and when the calculated sum is a specified value or less, sets a predetermined specified level of restrictions to review posting by the reviewer of the one review.

The restriction setting unit 15 sets a restrictive time period during which a reviewer cannot post a review as restrictions on the processing of posting by the reviewer. To be specific, when the level of negative evaluations on a review is a specified level or higher, the restriction setting unit 15 sets a restrictive time period in accordance with the level of negative evaluations. The restrictive time period may be set based on a predetermined correspondence between the level of negative evaluations and the restrictive time period to be set, for example. When the restrictive time period is set by the restriction setting unit 15, the review posting control device 1 makes control so as not to accept posting of any review from the reviewer of the review, as described later. By making such control, posting by the reviewer of a review that has received negative evaluations is prohibited for a given period of time, and it is thereby possible to prevent an increase in posting of inappropriate reviews that are not helpful to users.

Further, the restriction setting unit 15 may set the upper limit or the lower limit of characters in the contents of a review as restrictions on the contents of posting by the reviewer. To be specific, when the level of negative evaluations on reviews by a reviewer is a specified level or higher, the restriction setting unit 15 counts the number of characters in reviews by the reviewer by referring to the review history storing unit 12.

Then, in the case where the average of the number of characters in reviews by the reviewer is a specified threshold or more or where the deviation value of the number of characters in reviews by the reviewer when the number of characters in all reviews is a statistical population is a specified value or more, the restriction setting unit 15 can determine that negative evaluations are given because of too many characters in reviews. In this case, the restriction setting unit 15 sets the upper limit of the number of characters in accordance with the level of negative evaluations. Although the specified threshold and the specified deviation value related to the average of the number of characters in reviews for determining the cause of negative evaluations may be 200 and 70, respectively, for example, they are not limited to the number of characters and the deviation value.

On the other hand, in the case where the average of the number of characters in reviews by the reviewer is a specified threshold or less or where the deviation value of the number of characters in reviews by the reviewer when the number of characters in all reviews is a statistical population is a specified value or less, the restriction setting unit 15 can determine that negative evaluations are given because of too few characters in reviews. In this case, the restriction setting unit 15 sets the lower limit of the number of characters in accordance with the level of negative evaluations. Although the specified threshold and the specified deviation value related to the average of the number of characters in reviews for determining the cause of negative evaluations may be 10 and 30, respectively, for example, they are not limited to the number of characters and the deviation value.

The upper limit and the lower limit to be set may be set based on a correspondence that is predetermined between the level of negative evaluations and the upper limit and the lower limit to be set, for example. When the upper limit or the lower limit of characters is set by the restriction setting unit 15, the review posting control device 1 performs control so as not to accept posting of the number of characters exceeding the upper limit from the reviewer, as described later. By making such control, it is possible to prevent presentation of inappropriate reviews that are not helpful to users.

In the case where a specified number or more of evaluation information indicating a specified level or higher of positive evaluations are received, the restriction setting unit 15 may set a lower level of restrictions than that in the case where a specified number or more of such evaluation information are not received.

To be specific, the restriction setting unit 15 refers to the review history storing unit 12 shown in Fig. 4, and when the number of evaluation information indicating positive evaluations (P) on one review is a specified number or more, lowers by a predetermined specified amount the level of restrictions on posting that is set for the reviewer of the review using the above-described method, for example. The amount of decrease in the level of restrictions may be predetermined in accordance with the number of evaluation information indicating positive evaluations and the level of positive evaluations. The specified number related to positive evaluation information for setting the level of restrictions on review posting may be "3", for example, although it is not limited to this number.

Further, in the case where the contents of evaluation are represented by a five-level score from 1 to 5 indicating the level of positive evaluations, for example, the restriction setting unit 15 may count the contents of evaluation with the score of 4 and 5 as positive evaluations, and when the number of evaluation information where the score in the contents of evaluation is 4 or 5 is a specified number or more, lower the level of restrictions that has been set for review posting by the reviewer of the one review. In this manner, in the case where the contents of evaluation are represented by a multi-level score indicating the level of positive evaluations, the restriction setting unit 15 can count the evaluation information with a score larger than a specified value "3" as positive evaluations.

A review on which positive evaluations are made has a great probability of being helpful to other users. As described above, when evaluation information indicating positive evaluations is received, the level of restrictions on posting by the reviewer of the review that has received positive evaluations is set to be low, so that restrictions about posting by that reviewer are adjusted appropriately.

Note that the restriction setting unit 15 may set restrictions so that the degree of contribution of one unit in the level of negative evaluations in evaluation information to an increase in the rise of restrictions is larger than the degree of contribution of one unit in the level of positive evaluations to a decrease in the level of restrictions. To be specific, the restriction setting unit 15 may set restrictions so that the degree of contribution of evaluation information indicating one negative evaluation to an increase in the rise of restrictions is larger than the degree of contribution of evaluation information indicating one positive evaluation to a decrease in the level of restrictions.

For example, in the case where the contents of evaluation on reviews are represented by data (N) indicating negative evaluations or data (P) indicating positive evaluations, it is considered that each of evaluation information indicating one negative evaluation and evaluation information indicating one positive evaluation contributes to an increase and a decrease in the level of restrictions that is set to a reviewer of a review. In this case, the restriction setting unit 15 sets restrictions so that the degree of contribution of evaluation information indicating one negative evaluation to an increase in the level of restrictions is larger than the degree of contribution of evaluation information indicating one positive evaluation to a decrease in the level of restrictions. Further, the restriction setting unit 15 can set the minimum number of negative evaluation information required for setting restrictions to be smaller than the minimum number of positive evaluation information required for lowering the level of restrictions. By adjusting the level of restrictions in this manner, restrictions on posting by a reviewer are adjusted more appropriately, and the quality of posted reviews is improved.

Further, in the case where the level of negative or positive evaluations in evaluation information is represented by points, the restriction setting unit 15 may set restrictions so that the degree of contribution of one point in evaluation information indicating negative evaluations to an increase in the rise of restrictions is larger than the degree of contribution of one point in evaluation information indicating positive evaluations to a decrease in the level of restrictions.

The restriction setting unit 15 may determine the presence or absence of a correlation between a reviewer and a review evaluator who has made a specified level or higher of positive evaluations in evaluation information based on the evaluation information, and when it is determined that there is a correlation, set a smaller amount of decrease in the level of restrictions on the basis of the positive evaluations by the review evaluator compared with that when it is determined that there is no correlation.

In the case where there is a correlation between a reviewer and a review evaluator who has made positive evaluations on the review, there is a high possibility that the review evaluator has made positive evaluations for the purpose of lowering the level of restrictions on posting by the reviewer in collusion with the reviewer. Accordingly, it is not suitable to lower the level of restrictions on the reviewer based on the evaluations by such a review evaluator from the perspective of improving the quality of reviews.

The presence or absence of a correlation between a reviewer and a review evaluator can be determined by various methods based on information stored in the review history storing unit 12. For example, the restriction setting unit 15 can determine that there is a correlation between one reviewer and a review evaluator when the proportion of the number of evaluation information indicating positive evaluations to the number of evaluation information by the same review evaluator on each of a plurality of reviews posted by one reviewer is a predetermined percentage or more.

The determination about the presence or absence of a correlation is specifically described with reference to the example of Fig. 4. It is assumed that the specified percentage related to positive evaluation information by the same review evaluator for the determination about the presence or absence of a correlation is 80%, for example. The review history storing unit 12 shown in Fig. 4 stores three evaluations (review ID "R1", "R2", "R3") by the review evaluator "BBB" on the reviews by the reviewer "AAA", and the number of positive evaluations among those three evaluations is three. Accordingly, the proportion of positive evaluation information to the evaluation information by the review evaluator "BBB" on the reviews by the reviewer "AAA" is 100%, which is higher than the specified percentage "80%", and therefore the restriction setting unit 15 determines that there is a correlation between the reviewer "AAA" and the review evaluator "BBB". A correlation between a reviewer and a review evaluator who has made positive evaluations is thereby determined accurately and appropriately.

Further, the restriction setting unit 15 can determine that there is a correlation between one reviewer and a review evaluator when the number of evaluation information indicating positive evaluations by the same review evaluator on each of a plurality of reviews posted by one reviewer is a specified number or more.

The determination about the presence or absence of a correlation is specifically described with reference to the example of Fig. 4. It is assumed that the specified number related to positive evaluation information by the same review evaluator for the determination about the presence or absence of a correlation is 2, for example. The review history storing unit 12 shown in Fig. 4 stores three positive evaluations (review ID "R1", "R2", "R3") by the review evaluator "BBB" on the reviews by the reviewer "AAA". Accordingly, the number of evaluation information indicating positive evaluations by the same review evaluator is "3", which is larger than the specified number "2", and therefore the restriction setting unit 15 determines that there is a correlation between the reviewer "AAA" and the review evaluator "BBB". Note that the number of positive evaluation information by the user "AAA" on the reviews posted by the user "BBB" may be also counted as the number of positive evaluation information for the determination about the presence or absence of a correlation.

When it is determined that there is a correlation, the restriction setting unit 15 sets a smaller amount of decrease in the level of restrictions on the basis of the positive evaluations by the review evaluator "BBB" compared with that when it is determined that there is no correlation, or does not use the positive evaluations by the review evaluator "BBB" for setting of restrictions. In this manner, when there is a correlation between a review evaluator who has made positive evaluations and a reviewer, the degree of contribution of the positive evaluations to relaxation of restrictions is reduced, and it is thereby possible to prevent that the level of restrictions on the reviewer is improperly set to be low.

The restriction setting unit 15 may determine the presence or absence of a correlation between a reviewer and a review evaluator who has made a specified level or higher of negative evaluations in evaluation information based on the evaluation information, and when it is determined that there is a correlation, set a lower level of restrictions in the setting of restrictions on the basis of the negative evaluations by the review evaluator compared with that when it is determined that there is no correlation.

In the case where there is a correlation between a reviewer and a review evaluator who has made negative evaluations on the review, there is a high possibility that the review evaluator has made negative evaluations for the purpose of causing disadvantages to the reviewer. Accordingly, it is not suitable to raise the level of restrictions on the reviewer based on the evaluations by such a review evaluator from the perspective of preventing improper disadvantages to the reviewer.

The presence or absence of a correlation between a reviewer and a review evaluator can be determined by various methods based on information stored in the review history storing unit 12. For example, the restriction setting unit 15 can determine that there is a correlation between one reviewer and a review evaluator when the proportion of the number of evaluation information indicating negative evaluations to the number of evaluation information by the same review evaluator on each of a plurality of reviews posted by one reviewer is a predetermined percentage or more. A correlation between a reviewer and a review evaluator who has made negative evaluations is thereby determined accurately and appropriately.

The determination about the presence or absence of a correlation is specifically described with reference to the example of Fig. 4. It is assumed that the specified percentage related to negative evaluation information by the same review evaluator for the determination about the presence or absence of a correlation is 80%, for example. The review history storing unit 12 shown in Fig. 4 stores three evaluations (review ID "R1", "R2", "R3") by the review evaluator "GGG" on the reviews by the reviewer "AAA", and the number of negative evaluations among those three evaluations is three. Accordingly, the proportion of negative evaluation information to the evaluation information by the review evaluator "GGG" on the reviews by the reviewer "AAA" is 100%, which is higher than the specified percentage "80%", and therefore the restriction setting unit 15 determines that there is a correlation between the reviewer "AAA" and the review evaluator "GGG".

Further, the restriction setting unit 15 can determine that there is a correlation between one reviewer and a review evaluator when the number of evaluation information indicating negative evaluations by the same review evaluator on each of a plurality of reviews posted by one reviewer is a specified number or more.

The determination about the presence or absence of a correlation is specifically described with reference to the example of Fig. 4. It is assumed that the specified number related to negative evaluation information by the same review evaluator for the determination about the presence or absence of a correlation is 2, for example. The review history storing unit 12 shown in Fig. 4 stores three negative evaluations (review ID "R1", "R2", "R3") by the review evaluator "GGG" on the reviews by the reviewer "AAA". Accordingly, the number of evaluation information indicating negative evaluations by the same review evaluator is "3", which is larger than the specified number "2", and therefore the restriction setting unit 15 determines that there is a correlation between the reviewer "AAA" and the review evaluator "GGG".

When it is determined that there is a correlation, the restriction setting unit 15 sets a smaller amount of increase in the level of restrictions on the basis of the negative evaluations by the review evaluator "GGG" on the reviews posted by the reviewer "AAA" compared with that when it is determined that there is no correlation, or does not use the negative evaluations by the review evaluator "GGG" for setting of restrictions. In this manner, a correlation between a reviewer and a review evaluator is taken into consideration, and it is thereby possible to prevent improper restrictions on the reviewer.

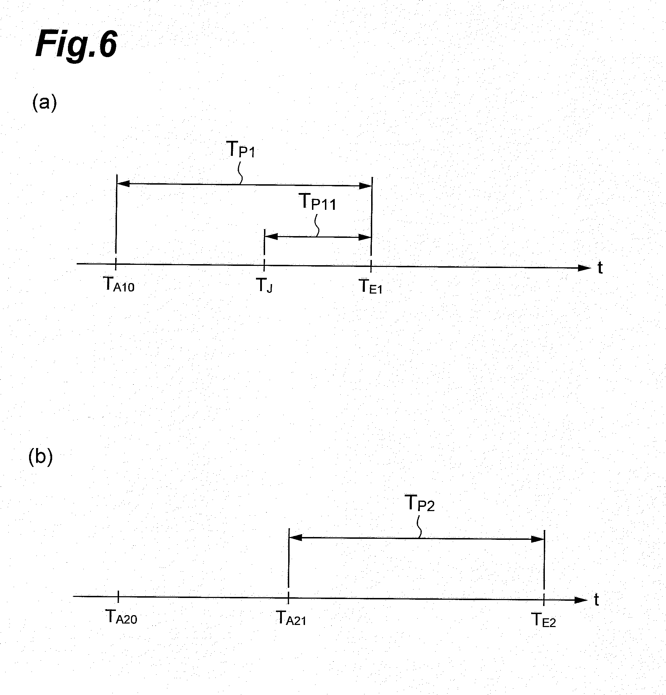

Hereinafter, the starting point of a restrictive time period in the case where the restrictive time period is set as a time period during which a reviewer cannot post a review as restrictions on the processing of posting by the reviewer is described with reference to Fig. 6. The restriction setting unit 15 can set the starting point of the restrictive time period to the time when the review is posted. To be specific, as shown in Fig. 6(a), in the case where a restrictive time period T_{P1} is set for a review posted at a review posting time T_{A10}, the restriction setting unit 15 sets the starting point of the restrictive time period T_{P1} to the time T_{A10}. In this case, the restrictive time period expires at time T_{E1}. Note that, in the case where the setting of the restrictive time period is performed at time T_{J}, not the review posting time T_{A10}, the substantial restrictive time period is time T_{P11}. By setting the restrictive time period in this manner, posting by the reviewer of a review that has received negative evaluations is prohibited from the time when the review is posted, and it is thereby possible to prevent successive posting of inappropriate reviews that are not helpful to users.

Further, the restriction setting unit 15 may set the starting point of the restrictive time period to the time of next review posting following the review posting based on which restrictions are imposed. Then, the restriction setting unit 15 may perform control so as not to accept the next review posting. To be specific, as shown in Fig. 6(b), in the case where a restrictive time period T_{P2} is set for a review posted at a review posting time T_{A20}, the restriction setting unit 15 sets the starting point of the restrictive time period T_{P2} to the next review posting time T_{A21} by the reviewer. In this case, the restrictive time period expires at time T_{E2}. Then, the restriction setting unit 15 performs control so as not to accept review posting made at the time T_{A21}. In this case, posting by the reviewer of a review that has received negative evaluations is prohibited from the time when the reviewer makes the next posting following the posting of that review, and it is thereby possible to prevent expiration of the restrictive time period between those posting times, so that the penalty of restrictions on posting is reliably imposed on the reviewer.

The posting control unit 16 is a part that exercises restrictions on posting by a reviewer based on the restrictions set by the restriction setting unit 15. For example, in the case where the restrictive time period is set as restrictions on the processing of review posting, the posting control unit 16 performs control so as not to accept posting by the reviewer based on the restrictive time period set by the restriction setting unit 15. To be specific, the posting control unit 16 performs control so that the review posting accepting unit 11 does not accept posting of any review by the reviewer during a period from the starting point of the restrictive time period to the expiration. When the reviewer posts a review during the restrictive time period, the review posting accepting unit 11 determines whether the user ID of the reviewer matches a user on which restrictions are being imposed, and when it matches the reviewer on which restrictions are being imposed, posting of that review is restricted.

Further, in the case where the upper limit or the lower limit of the number of characters in the contents of a review is set as restrictions on the contents of review posting, the posting control unit 16 performs control so as to restrict the number of characters in a review by a reviewer based on the upper limit or the lower limit of the number of characters set by the restriction setting unit 15. To be specific, the posting control unit 16 performs control so that the review posting accepting unit 11 does not accept posting of a review when the number of characters in the contents of the review by the reviewer exceeds the set upper limit or falls below the lower limit.

It should be noted that, although the posting control unit 16 in this embodiment is placed in the review posting control device 1, it may be placed in another device that can communicate with the review posting control device 1.

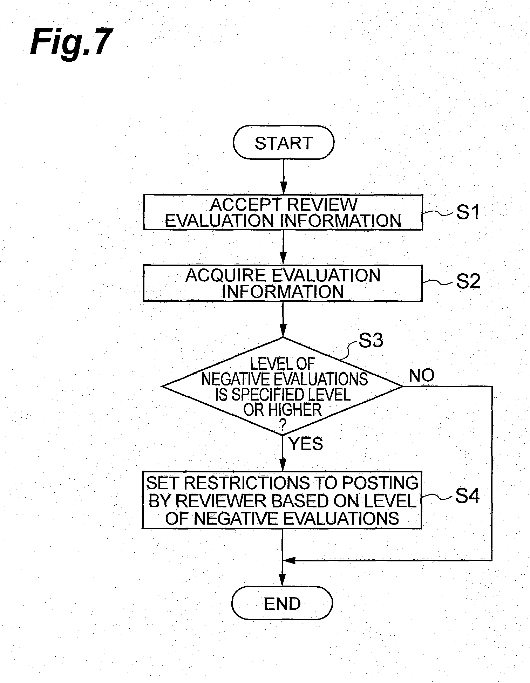

Hereinafter, the operation of the review posting control device 1 according to this embodiment is described with reference to Fig. 7. Fig. 2 is a flowchart showing a process in a review evaluation method performed by the review posting control device 1.

First, the evaluation information accepting unit 14 accepts evaluation information from the terminal T of a review evaluator (S1). The accepted evaluation information is accumulated in the review history storing unit 12. Next, the restriction setting unit 15 refers to the review history stored in the review history storing unit 12 and acquires the evaluation information (S2).

Then, the restriction setting unit 15 determines whether the level of negative evaluations on reviews is a specified level or higher based on one or more evaluation information accepted by the evaluation information accepting unit 14 (S3). When it is determined that the level of negative evaluations on reviews is a specified level or higher, the process proceeds to Step S4. On the other hand, when it is not determined that the level of negative evaluations on reviews is a specified level or higher, the process ends.

In Step S4, the restriction setting unit 15 sets restrictions on posting by a reviewer based on the level of negative evaluations in the evaluation information (S4). In this step, the restriction setting unit 15 may make determination about a correlation between a reviewer and an evaluator and adjust the level of restrictions. Then, the posting control unit 16 exercises restrictions on posting by the reviewer based on the restrictions set by the restriction setting unit 15.

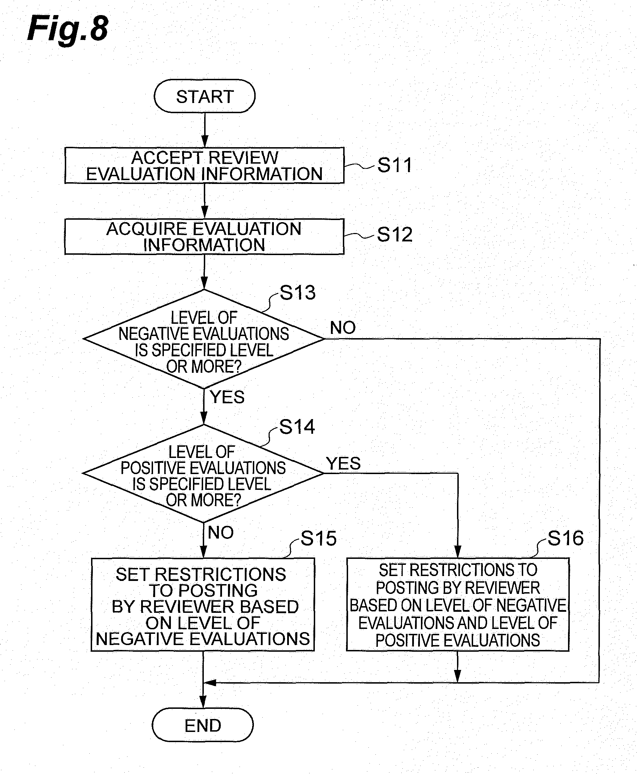

Note that the restriction setting unit 15 can execute the above-described process for setting restrictions for each review posting. Further, the restriction setting unit 15 may refer to the review history storing unit 12 at every specified time and execute the restriction setting process (batch processing) for each user. The history of review posting that is referred to in this case may be the most recent one or a plurality of reviews posted prior to the current time. When the history about a plurality of posted reviews is referred to, the restriction setting unit 15 can set the total time of the restrictive time period that is set for each review posting as restrictions. Note that the trigger for the process by the restriction setting unit 15 described above is applicable also to the flowchart shown in Fig. 8.

Another example of the process performed in the review posting control device 1 according to this embodiment is described with reference to Fig. 8.

First, the evaluation information accepting unit 14 accepts evaluation information from the terminal T of a review evaluator (S11). The accepted evaluation information is accumulated in the review history storing unit 12. Next, the restriction setting unit 15 refers to the review history stored in the review history storing unit 12 and acquires the evaluation information (S12).

Then, the restriction setting unit 15 determines whether the level of negative evaluations on reviews is a specified level or higher based on one or more evaluation information accepted by the evaluation information accepting unit 14 (S13). When it is determined that the level of negative evaluations on reviews is a specified level or higher, the process proceeds to Step S 14. On the other hand, when it is not determined that the level of negative evaluations on reviews is a specified level or higher, the process ends.

In Step S 14, the restriction setting unit 15 determines whether the level of positive evaluations on reviews is a specified level or higher based on the evaluation information accepted by the evaluation information accepting unit 14 (S14). When it is determined that the level of positive evaluations on reviews is a specified level or higher, the process proceeds to Step S16. On the other hand, when it is not determined that the level of positive evaluations on reviews is a specified level or higher, the process proceeds to Step S 15.

In Step S15, the restriction setting unit 15 sets restrictions on posting by a reviewer based on the level of negative evaluations in the evaluation information (S15). On the other hand, in Step S16, the restriction setting unit 15 sets restrictions on posting by a reviewer based on the level of negative evaluations and the level of positive evaluations in the evaluation information (S16). In Steps S 15 and S16, the restriction setting unit 15 may make determination about a correlation between a reviewer and an evaluator and adjust the level of restrictions as described above. Then, the posting control unit 16 exercises restrictions on posting by the reviewer based on the restrictions set by the restriction setting unit 15.

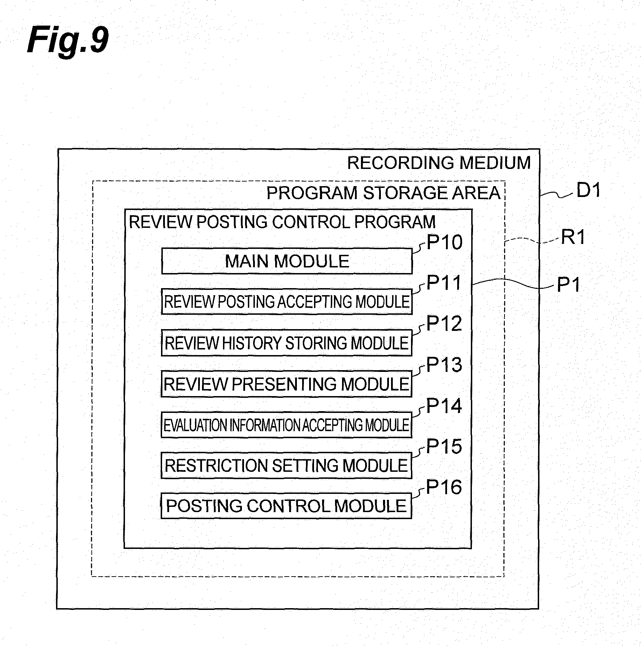

A review posting control program that causes a computer to function as the review posting control device 1 is described hereinafter with reference to Fig. 9.

A review posting control program P1 includes a main module P10, a review posting accepting module P11, a review history storing module P12, a review presenting module P13, an evaluation information accepting module P14, a restriction setting module P15, and a posting control module P16.

The main module P10 is a part that exercises control over the review providing process. The functions implemented by executing the review posting accepting module P11, the review history storing module P12, the review presenting module P13, the evaluation information accepting module P14, the restriction setting module P15, and the posting control module P16 are equal to the functions of the review posting accepting unit 11, the review history storing unit 12; the review presenting unit 13, the evaluation information accepting unit 14, the restriction setting unit 15 and the posting control unit 16 shown in Fig. 2, respectively.

The review posting control program P1 is provided through a storage medium such as CD-ROM or DVD-ROM or semiconductor memory, for example. Further, the review posting control program P1 may be provided as a computer data signal superimposed onto a carrier wave over a communication network.

In the review posting control device 1, the review posting control method and the review posting control program P1 according to the embodiment described above, evaluation information on a posted review is accepted by the evaluation information accepting unit 14, and when the level of negative evaluations in the evaluation information is a specified level or higher, restrictions on posting by the reviewer of the review are set by the restriction setting unit 15. Consequently, at least one of the processing of posting and the contents of posting by the reviewer of the review that has received negative evaluations is restricted. It is thereby possible to prevent an increase in posting of inappropriate reviews that are not helpful to users.

Hereinbefore, the present invention has been described in detail with respect to the embodiment thereof. However, the present invention is not limited to the above-described embodiment. Various changes and modifications may be made therein without departing from the scope of the invention.

### Industrial Applicability

As described above, according to the embodiment, a review posting control device capable of preventing an increase in posting of inappropriate reviews that are not helpful to users is provided.

### Reference Signs List

1...review posting control device, 11...review posting accepting unit, 12...review history storing unit, 13...review presenting unit, 14... evaluation information accepting unit, 15...restriction setting unit, 16...posting control unit, P1...review posting control program, P10...main module, P11...review posting accepting module, P12...review history storing module, P13...review presenting module, P 14... evaluation information accepting module, P15...restriction setting module, P 16...posting control module

## Claims

1. A review posting control device comprising:
a selecting means configured to select a reviewer having posted a review having received a specified level or higher of negative evaluations based on one or more evaluation information containing positive or negative evaluations by a review evaluator on a review posted by a reviewer for a review target; and
a posting restricting means configured to impose specified posting restrictions in accordance with a level of negative evaluations received by the review on the reviewer selected by the selecting means.

2. The review posting control device according to Claim 1, wherein
when the number of evaluation information containing a specified level or higher of negative evaluations is a specified number or more, or when a sum of values indicating a level of positive evaluations in one or more evaluation information is a specified value or less, the posting restricting means sets restrictions to at least one of processing of posting and contents of posting by the reviewer as the specified restrictions.

3. The review posting control device according to Claim 1 or 2, wherein
when a specified number or more of evaluation information indicating a specified level or higher of positive evaluations are received, the posting restricting means sets a lower level of the restrictions than when a specified number or more of the evaluation information are not received.

4. The review posting control device according to Claim 3, wherein
the posting restricting means sets restrictions so that a degree of contribution of one unit in a level of negative evaluations in the evaluation information to an increase in a level of restrictions is larger than a degree of contribution of one unit in a level of positive evaluations to a decrease in a level of restrictions.

5. The review posting control device according to Claim 3 or 4, wherein
the posting restricting means determines presence or absence of a correlation between the reviewer and a review evaluator having made a specified level or higher of positive evaluations in the evaluation information based on the evaluation information, and
when it is determined that there is a correlation, the posting restricting means sets a smaller amount of decrease in a level of restrictions based on positive evaluations by the review evaluator compared with that when it is determined that there is no correlation.

6. The review posting control device according to Claim 5, wherein
when a proportion of the number of evaluation information indicating positive evaluations to the number of evaluation information by a same review evaluator on each of a plurality of reviews posted by one reviewer is a specified percentage or more, the posting restricting means determines that there is a correlation between the one reviewer and the review evaluator.

7. The review posting control device according to Claim 5 or 6, wherein
the posting restricting means uses a fact that the number of evaluation information indicating positive evaluations by a same review evaluator on each of a plurality of reviews posted by one reviewer is a specified number or more as a necessary condition to determine that there is a correlation between the one reviewer and the review evaluator.

8. The review posting control device according to any one of Claims 1 to 7, wherein
the posting restricting means determines presence or absence of a correlation between the reviewer and a review evaluator having made a specified level or higher of negative evaluations in the evaluation information based on the evaluation information, and
when it is determined that there is a correlation, the posting restricting means sets a smaller level of restrictions in setting of restrictions based on negative evaluations by the review evaluator compared with that when it is determined that there is no correlation.

9. The review posting control device according to Claim 8, wherein
when a proportion of the number of evaluation information indicating negative evaluations to the number of evaluation information by a same review evaluator on each of a plurality of reviews posted by one reviewer is a predetermined percentage or more, the posting restricting means determines that there is a correlation between the one reviewer and the review evaluator.

10. The review posting control device according to Claim 8 or 9, wherein
the posting restricting means uses a fact that the number of evaluation information indicating negative evaluations by a same review evaluator on each of a plurality of reviews posted by one reviewer is a predetermined number or more as a necessary condition to determine that there is a correlation between the one reviewer and the review evaluator.

11. The review posting control device according to any one of Claims 1 to 10, wherein
the posting restricting means sets a restrictive time period during which the reviewer of the review cannot post a review in accordance with a level of negative evaluations on the review as restrictions on processing of posting by the reviewer.

12. The review posting control device according to Claim 11, wherein
the posting restricting means sets a starting point of the restrictive time period to the review posting time.

13. The review posting control device according to Claim 11, wherein
the posting restricting means sets a starting point of the restrictive time period to next review posting time following the review posting.

14. The review posting control device according to Claim 13, wherein
the posting restricting means sets restrictions so as not to accept the next review posting.

15. The review posting control device according to any one of Claims 1 to 14, wherein
the posting restricting means sets an upper limit or a lower limit of the number of characters in contents of the review in accordance with a level of negative evaluations on the review as restrictions on contents of posting by the reviewer.

16. The review posting control device according to any one of Claims 1 to 15, further comprising:
an evaluation information accepting means configured to accept the evaluation information; and
an evaluation information storing means configured to store the evaluation information accepted by the evaluation information accepting means, wherein
the posting restricting means sets the restrictions by referring to the evaluation information stored in the evaluation information storing means.

17. A review posting control method performed by a review posting control device, the method comprising:
a selecting step of selecting a reviewer having posted a review having received a specified level or higher of negative evaluations based on one or more evaluation information containing positive or negative evaluations by a review evaluator on a review posted by a reviewer for a review target; and
a posting restricting step of imposing specified posting restrictions in accordance with a level of negative evaluations received by the review on the reviewer selected in the selecting step.

18. A review posting control program causing a computer to function as a review posting control device, the program causing the computer to implement:
a selecting function to select a reviewer having posted a review having received a specified level or higher of negative evaluations based on one or more evaluation information containing positive or negative evaluations by a review evaluator on a review posted by a reviewer for a review target; and
a posting restricting function to impose specified posting restrictions in accordance with a level of negative evaluations received by the review on the reviewer selected by the selecting function.

19. A computer-readable recording medium for recording a review posting control program causing a computer to function as a review posting control device, the review posting control program causing the computer to implement:
a selecting function to select a reviewer having posted a review having received a specified level or higher of negative evaluations based on one or more evaluation information containing positive or negative evaluations by a review evaluator on a review posted by a reviewer for a review target; and
a posting restricting function to impose specified posting restrictions in accordance with a level of negative evaluations received by the review on the reviewer selected by the selecting function.
